# EUROPÄISCHE PATENTSCHRIFT

(11) **EP 3 814 646 B1**
(45) Veröffentlichungstag und Bekanntmachung des Hinweises auf die Patenterteilung: **07.09.2022**
(21) Anmeldenummer: 19708931.1
(22) Anmeldetag: 18.02.2019
(51) Int. Cl.: F16C 19/52, F16C 19/06, F16C 33/78

(54) **WÄLZLAGER MIT INTEGRIERTER STROMABLEITFUNKTION**
ANTI-FRICTION BEARING HAVING AN INTEGRATED CURRENT-REMOVAL FUNCTION
PALIER À ROULEMENT DOTÉ D'UNE FONCTION DE CONDUCTION DU COURANT INTÉGRÉE

(30) Priorität: 29.06.2018 DE 102018115732
(43) Veröffentlichungstag der Anmeldung: 05.05.2021
(73) Patentinhaber: Schaeffler Technologies AG & Co. KG, 91074 Herzogenaurach (DE)
(72) Erfinder: SCHAMIN, Alexander, 90522 Oberasbach (DE)
(86) Internationale Anmeldenummer: PCT/DE2019/100148
(87) Internationale Veröffentlichungsnummer: WO 2020/001674

(56) Entgegenhaltungen:
- DE-A1-102016 217 872
- JP-A- 2008 286 229
- US-A1- 2004 081 380

## Beschreibung

Die Erfindung betrifft eine Lageranordnung mit einem Wälzlager mit einer integrierten Stromableitungsfunktion sowie ein Verfahren zur Herstellung eines solchen Wälzlagers gemäß dem Oberbegriff der unabhängigen Patentansprüche.

Aus dem Stand der Technik sind rotierende Wellen, beispielsweise von Turbinen, Elektromotoren, oder anderen Wellen bekannt, welche elektrisch leitend mit Komponenten verbunden sind, an welche eine elektrische Spannung induziert wird oder bei denen sich im Betrieb eine elektrische Spannung aufbauen kann. Ein solcher Aufbau einer elektrischen Spannung ist insbesondere bei einer Antriebswelle eines elektrischen Wechselstrommotors bekannt, wodurch hohe Spannungen zwischen einem elektrisch aufgeladenen Bauteil und einem weiteren Bauteil entstehen können. Während der Elektromotor in Betrieb ist, erhöht sich der elektrische Widerstand in den Lagern, wodurch es zu einer Aufladung an der Oberfläche der rotierenden Welle kommt. Dabei können hohe Spannungsunterschiede auftreten, welche sich auf einem elektrischen Pfad mit dem geringsten Widerstand entladen. Bei dieser Entladung kann es zu einem elektrischen Funken kommen, welcher einen funkenerosiven Materialabtrag an einer Oberfläche bewirkt. Führt der elektrische Pfad mit dem geringsten elektrischen Widerstand durch das Wälzlager, kann es somit zu einer Beschädigung an der Oberfläche der Wälzkörper oder an den Laufbahnen der Wälzkörper kommen, wodurch es zu einer Schädigung des Wälzlagers und zu einem vorzeitigen Ausfall des Wälzlagers kommen kann.

Um dies zu vermeiden, sind aus dem Stand der Technik rotierende Wellen von elektrischen Bauteilen bekannt, bei denen ein Potenzialausgleich beispielsweise mittels schleifender Kupferbürsten stattfindet. Aus der EP 1 755 207 A2 ist eine Baugruppe zur Lagerung und Abdichtung einer Welle bekannt, welche eine Bürsteneinheit mit elektrisch leitenden, dünnen Fasern aufweist. Durch solche elektrisch leitenden Fasern kann ein Potenzialausgleich zwischen dem Gehäuse und der Welle geschaffen werden, so dass der elektrische Pfad mit dem geringsten Widerstand nicht durch die Wälzkörper des Wälzlagers führt und somit die Gefahr einer Beschädigung und eines vorzeitigen Ausfalls verringert wird.

Aus der WO 2015 / 086096 A1 ist eine Dichtanordnung bekannt, welche an einem ersten Maschinenbauteil, beispielsweise einem Gehäuse angeordnet ist und welche einen schleifenden Kontakt an einem zweiten Maschinenbauteil, beispielsweise einer Welle hat, wobei zumindest eine Dichtlippe der Dichtanordnung an dem zweiten Maschinenbauteil anliegt. Zusätzlich weist die Dichtanordnung ein Kontaktelement auf, welches elektrisch leitfähig ist und somit einen Potenzialausgleich zwischen dem ersten Maschinenbauteil und dem zweiten Maschinenbauteil ermöglicht.

Die DE 10 2014 112 561 A1 offenbart ein Wälzlager mit einem elektrischen Bypass für die Wälzkörper, bei dem auf mindestens einer Seite des Wälzlagers eine elektrisch leitfähige Folie angeordnet ist, welche als Strombrücke mit dem Außenring und dem Innenring in elektrisch leitender Verbindung steht. Die Folie bildet einen die Wälzkörper umgehenden elektrischen Strompfad zur Ableitung eines zwischen dem Außenring und dem Innenring auftretenden elektrischen Stromes aus.

Aus der DE 10 2014 204 719 A1 ist ein Wälzlager mit integriertem Nebenschluss bekannt, welches mit einem Schutz vor Beschädigung durch elektrische Entladung versehen ist. Dazu ist zwischen dem Innenring und dem Außenring des Wälzlagers ein Schutzschild vorgesehen, welches sich radial zwischen dem Innenring und dem Außenring erstreckt, wobei der Schutzschild ein Körperteil und mindestens eine stromleitende Dichtung aufweist, wobei aus dem Körper elektrisch leitende Fasern vorstehen, welche an einem der Lagerringe anliegen.

Aus der US 2004/0081380 A1 ist eine Lageranordnung mit einem Wälzlager bekannt, dessen konduktive Wirkung zwischen einem Gehäuse und einer Welle über leitfähiges Fett abgesichert ist. Das Wälzlager ist mit dem Fett befüllt und mit Dichtungen abgedichtet.

Ferner offenbar die DE 10 2017 106 695 B3 ein Wälzlager zur Lagerung einer Antriebswelle in einem Elektromotor, wobei zwischen einem Innenring und einem Außenring des Wälzlagers ein Kohlefaserverbundbauteil befestigt ist, welches ein Trägerelement und in das Trägerelement eingebettete Kohlenstofffasern aufweist, wobei die Kohlenstofffasern an dem jeweils anderen Lagerring anliegen und somit einen Nebenschluss herstellen.

Mit der DE 10 2016 217 872 A1 ist ein Wälzlager zur drehbaren Lagerung einer Welle mit einem Innenring mit einer ersten Laufbahn für einen Wälzkörper, mit einem Außenring mit einer zweiten Laufbahn für einen Wälzkörper, sowie zwischen den Laufbahnen der Lagerringe angeordneten Wälzkörpern offenbart. An einem Außenring sind zwei Bleche befestigt. Zwischen den beiden Blechen ist ein aus Bürstenfasern gebildetes elektrisch leitendes Element angeordnet. Die Bürstenfasern liegen an dem Innenring an. Eine derartige Baugruppe lässt sich einfach und kostengünstig herstellen und kann bei der Montage des Wälzlagers einfach eingepresst werden, wobei eine kraftschlüssige Verbindung zwischen der Baugruppe, insbesondere zwischen einem der Bleche, und dem Außenring des Wälzlagers hergestellt ist. Dadurch ist auf einfache und kostengünstige Art und Weise eine Stromableitfunktion in das Wälzlager integriert. Durch das Einspannen der elektrisch leitenden Bürste zwischen den beiden Blechen kann zudem eine vergleichsweise hohe Steifigkeit erzielt werden, sodass die Gefahr eines Abhebens der Bürstenfasern von dem Lagerring minimiert wird und die Bürste somit stets definiert anliegt.

Eine vergleichbare Anordnung geht auch aus der JP 2008 286 229 A2 hervor. Auch in dieser Anordnung sind Bündel aus leitfähigem Draht zwischen zwei Blechen eingeklemmt, deren Faserenden am Innenring des Wälzlagers anliegen. Die Bleche sind wie die für derartige Lager üblichen Dichtungen mit einem Wulst in den Außenring eingeschnappt und wahlweise auch zugleich als Dichtungsträger ausgeführt.

Nachteilig an den bekannten Lösungen ist jedoch, dass entweder ein Verschleiß an den Kupferbürsten auftritt, wodurch die Lebensdauer des Wälzlagers reduziert beziehungsweise ein Auswechseln der Kupferbürsten notwendig ist, oder bei einer Lösung mit einzelnen dünnen Kohlefasern die Gefahr eines Brechens der Fasern oder einer undefinierten Position der Kohlefaser zum jeweils gegenüberliegenden Wälzlagerring bzw. zur Welle gegeben ist. Eine Lösung mit einem Kohlefaserverbundbauteil ist vergleichsweise aufwendig in der Montage und somit entsprechend kostenintensiv.

Aufgabe der Erfindung ist es, ein Wälzlager vorzuschlagen, welches einen im Wesentlichen verschleißfreien Ausgleich von elektrischen Potenzialen zwischen einem Innenring und einem Außenring des Wälzlagers ermöglicht, wobei die Montage vereinfacht, die Robustheit erhöht und Kosten reduziert werden.

Erfindungsgemäß wird die Aufgabe für eine Lageranordnung mit einem Wälzlager zur drehbaren Lagerung einer Welle, insbesondere einer Antriebswelle eines Elektromotors, gelöst. Es ist vorgesehen, dass
- das elektrisch leitende Element als eine Stoffronde oder eine Vliesscheibe ausgeführt ist, wobei
- in den Stoff der Stoffronde oder in die Vliesscheibe elektrisch leitende Fäden und/oder elektrisch leitende Zusätze eingearbeitet sind,
- der Stoff der Stoffronde oder die Vliesscheibe eine Öffnung aufweist, durch welche die Welle durchgeführt werden kann.

Eine Stoffronde oder eine Vliesscheibe weisen eine hohe Flexibilität auf, sodass die freiliegenden Bereiche ohne hohe Reibungsverluste an dem jeweiligen Lagerring oder dem mit dem Lagerring verbundenen Bauteil, insbesondere an dem Innenring oder der Welle, anliegen können. Dadurch kann ein reibungsverlust-minimierter Nebenschluss ausgebildet werden, welcher einen elektrischen Potenzialausgleich zwischen dem Außenring und dem Innenring des Wälzlagers ermöglicht. In den Stoff der Stoffronde oder in die Vliesscheibe sind elektrisch leitende Fäden und/oder elektrisch leitende Zusätze eingearbeitet. Durch eingewebte Fäden oder in die Stoffronde oder die Vliesscheibe eingebrachte elektrisch leitende Zusätze kann die elektrische Leitfähigkeit erhöht werden. Alternativ kann die elektrische Leitfähigkeit durch solche elektrisch leitenden Fäden oder Zusätze hergestellt werden, wenn das Basismaterial, also der Stoff oder das Vlies elektrisch nichtleitend sind.

Mit der Erfindung ist außerdem vorgesehen, dass das elektrisch leitende Element eine Öffnung, vorzugsweise eine zentrische Öffnung aufweist, durch welche eine, mittels des Wälzlagers drehbar gelagerte Welle durchgeführt werden kann. Dadurch ist eine besonders einfache Montage des Wälzlagers und einer damit gestalteten Lageranordnung möglich, indem die Baugruppe aus den Blechen und dem elektrisch leitenden Element einfach über die Welle geschoben wird. Durch eine zentrische Öffnung kann zudem auf eine Lageorientierung der Baugruppe verzichtet werden. Zudem wird durch eine zentrische Öffnung ein gleichmäßiges Anliegen des elektrisch leitenden Elements an der Welle oder dem Innenring sichergestellt, sodass ein elektrisch leitender Nebenschluss zwischen dem Innenring und dem Außenring des Wälzlagers über das elektrisch leitende Element stets gewährleistet ist. Zudem weist die vorgeschlagene Lösung eine vergleichsweise geringe Reibung zwischen dem elektrisch leitenden Element und einem der Lagerringe oder einem mit dem Lagerring verbundenen Bauteil auf. Dadurch können sowohl die Verluste am Wälzlager als auch der Verschleiß minimiert werden.

Gemäß einer weiteren Verbesserung des Wälzlagers ist vorgesehen, dass die Bleche ringförmig ausgebildet sind. Besonders bevorzugt ist dabei, wenn ein Innendurchmesser der Ringe größer als der Durchmesser der Öffnung in dem elektrisch leitenden Element ist. Dadurch steht das elektrisch leitende Element in radialer Richtung über die Bleche hervor. Dadurch kann sichergestellt werden, dass die Bleche keinen Kontakt mit dem Innenring oder der Welle haben.

In einer weiteren Verbesserung der Erfindung ist vorgesehen, dass das elektrisch leitende Element in einzelne Kontaktsegmente unterteilt ist. Dabei kann die Kontaktfläche zwischen dem elektrisch leitenden Element und dem Innenring oder einer mit dem Innenring verbundenen Welle verkleinert werden, wodurch die Reibungsverluste des Wälzlagers minimiert werden können.

Alternativ ist mit Vorteil vorgesehen, dass das elektrisch leitende Element in radialer Richtung nach außen über die Bleche vorsteht und die Bleche an dem Innenring des Wälzlagers befestigt sind. In dieser Ausführungsform weist das elektrisch leitende Element eine Öffnung auf, welche vorzugsweise dem Innendurchmesser der Bleche entspricht, sodass eine einfache kraftschlüssige Verbindung der Bleche mit dem Innenring des Wälzlagers möglich ist.

In einer bevorzugten Ausführungsform ist vorgesehen, dass die elektrisch leitenden Zusätze Ruß, Graphit, Kohlenstoff und/oder Nanoröhren sind. Die genannten Materialien haben jeweils die Eigenschaft, elektrischen Strom zu leiten

In einer weiteren Verbesserung der Erfindung ist vorgesehen, dass auf dem Innenring oder auf der mit dem Innenring verbundenen Welle eine Hülse angeordnet ist. Vorzugsweise ist die Hülse beschichtet ausgeführt, um die Reibung zu minimieren. Die Hülse kann auf die Welle oder den Innenring aufgepresst werden, um eine stabile formschlüssige Verbindung auszubilden.

Besonders bevorzugt ist dabei, wenn die Hülse einen ersten Bereich aufweist, welcher parallel zur Oberfläche der Welle oder des Innenrings verläuft und einen zweiten Bereich, welcher in einem Winkel zum ersten Bereich, vorzugsweise rechtwinklig zum ersten Bereich verläuft, derart, dass der zweite Bereich einen Austritt von Schmiermittel aus dem Bereich der Wälzkörper verhindert oder mindert, derart dass eine Kontaktstelle zwischen dem elektrisch leitenden Element und dem Innenring oder der Welle im Wesentlich frei von Schmiermittel gehalten wird. Bei einer solchen Ausgestaltung kann die Hülse Teil einer Labyrinthdichtung das Wälzlagers sein, mit welcher das Eindringen von Schmutz in den Bereich der Wälzkörper verhindert und gleichzeitig ein Austreten von Schmiermittel aus dem Bereich der Wälzkörper minimiert wird. Dadurch wird der Kontaktbereich zwischen dem elektrisch leitenden Element und der Hülse frei von Schmiermittel gehalten, sodass der Strompfad nicht durch ein isolierendes Schmiermittel unterbrochen ist.

In einer vorteilhaften Ausführungsform der Erfindung ist vorgesehen, dass die Bleche eine Biegung, insbesondere eine Biegung mit einem Winkel von 30 bis 60 Grad aufweisen, wodurch das elektrisch leitende Element derart geführt ist, dass es unter einem von einem rechten Winkel abweichenden Winkel, insbesondere unter einem Winkel zwischen 30 und 60 Grad, an dem Innenring, der Welle oder der Hülse anliegt. Durch die Biegung ist es zum einen möglich, für eine stabilere Aufnahme des elektrisch leitenden Elements zwischen den Blechen zu sorgen, sodass die Gefahr, dass das elektrisch leitende Element aus seiner Klemmung zwischen den Blechen herausrutscht, verringert wird. Zum anderen führt das Anliegen des elektrisch leitenden Elements an dem Innenring, der Welle oder der Hülse dazu, dass die Reibung zwischen dem elektrisch leitenden Element und dem Innenring, der Welle oder der Hülse verringert wird, wodurch die Reibungsverluste des Wälzlagers minimiert werden können.

Erfindungsgemäß wird ein Verfahren zur Herstellung eines Wälzlagers zur drehbaren Lagerung einer Antriebswelle vorgeschlagen, wobei das Wälzlager einen Innenring mit einer ersten Laufbahn für Wälzkörper und einen Außenring mit einer zweiten Laufbahn für Wälzkörper sowie zwischen den Laufbahnen der Lagerringe angeordneten Wälzkörper aufweist. Es ist vorgesehen, dass zwischen zwei Blechen ein elektrisch leitendes Element eingespannt wird, wobei in das zwischen den Blechen eingespannte elektrisch leitende Element eine vorzugsweise zentrische Öffnung eingebracht wird, und wobei die beiden Bleche an einem der Lagerringe des Wälzlagers befestigt werden. Bei einem zwischen den beiden Blechen eingespannten elektrisch leitenden Element kann die Öffnung durch einen einfachen Stanz- oder Schneideprozess in das elektrisch leitende Element eingebracht werden, sodass auch die Bearbeitung eines flexiblen und wenig biegesteifen Material möglich ist. Zudem bietet ein Einspannen des elektrisch leitenden Elements die Möglichkeit, die Position der Öffnung gegenüber den Blechen zu definieren, sodass eine Baugruppe aus zwei Blechen und einem dazwischen geklemmten elektrisch leitenden Element entsteht, wobei das elektrisch leitende Element jeweils über den Innendurchmesser der Bleche vorsteht. Dadurch kann sichergestellt werden, dass ausschließlich das elektrisch leitende Element in Kontakt mit dem Innenring oder der Welle tritt, jedoch ein Kontakt zwischen den Blechen und dem Innenring oder der Welle vermieden wird.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend an einem bevorzugten Ausführungsbeispiel und den dazugehörigen Zeichnungen erläutert. Es zeigen:
- Fig. 1: ein Ausführungsbeispiel eines Wälzlagers einer erfindungsgemäßen Lageranordnung mit einer integrierten Stromableitfunktion über ein zwischen zwei Scheiben gehaltenes elektrisch leitendes Element;
- Fig. 2: ein weiteres Ausführungsbeispiel für ein erfindungsgemäßes Wälzlager mit einer integrierten Stromableitfunktion;
- Fig. 3: ein drittes Ausführungsbeispiel für ein erfindungsgemäßes Wälzlager mit einer integrierten Stromableitfunktion, wobei bei dieser Ausführungsvariante zwei elektrisch leitenden Elemente vorgesehen sind, welche jeweils zwischen Blechen eingespannt sind;
- Fig. 4: eine Anordnung aus zwei ringförmigen Blechen, zwischen welchen ein elektrisch leitendes Element eingeklemmt ist;
- Fig. 5: eine ebensolche Anordnung, nachdem eine zentrische Öffnung in das elektrisch leitende Element eingebracht wurde; und
- Fig. 6: eine alternative Ausführungsform einer solchen Anordnung, wobei an dem elektrisch leitenden Element mehrere über den Umfang verteilte Kontaktsegmente ausgebildet sind.

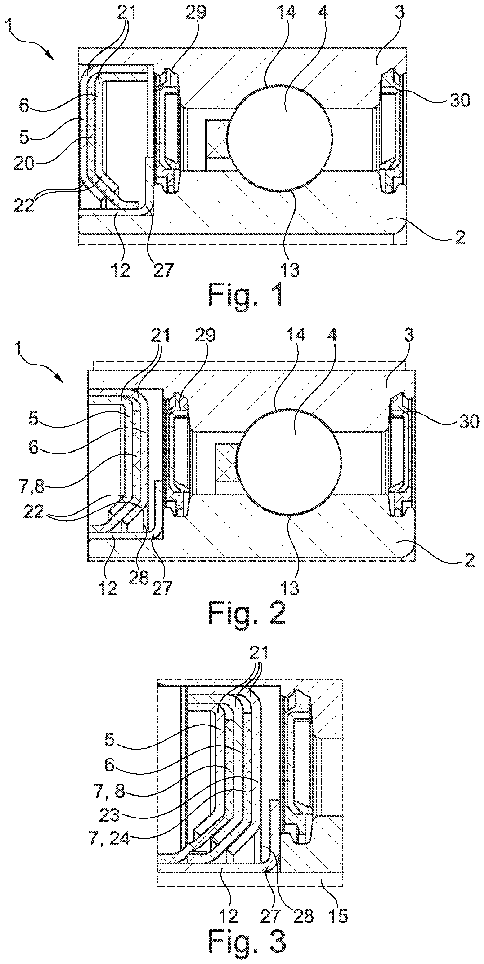

In Fig. 1 ist ein Ausführungsbeispiel eines erfindungsgemäßen Wälzlagers 1 für den Einsatz an einem Elektromotor, insbesondere zur Lagerung einer Welle, insbesondere der Antriebswelle des Elektromotors, mit einer integrierten Stromableitfunktion dargestellt. Das Wälzlager 1 umfasst einen Innenring 2 und einen Außenring 3, welche relativ zueinander verdrehbar sind. Dazu sind an dem Innenring 2 und dem Außenring 3 jeweils Laufbahnen 13, 14 ausgebildet, in welchen Wälzkörper 4, insbesondere Kugeln oder Rollen, geführt sind. Der Innenring 2 wird dabei von der Antriebswelle des Elektromotors getragen und ist drehfest mit einer Welle 15 siehe Figur 3) verbunden. Dazu kann der Innenring 2 insbesondere auf die Welle 15 aufgepresst sein. Der Außenring 3 ist in einem Gehäuse des Elektromotors angeordnet und drehfest mit diesem Gehäuse verbunden. In den Außenring 3 des Wälzlagers 1 sind zwei Bleche 5, 6 eingepresst, zwischen denen ein elektrisch leitendes Element 7 eingespannt ist. Das elektrisch leitende Element 7 ist vorzugsweise als eine Ronde 8, insbesondere als eine Stoffronde 17, eine Vliesscheibe 18 oder eine dünne Scheibe 19 aus einem Polymerwerkstoff ausgebildet. Die Bleche 5, 6 weisen einen Winkel 21 und eine weitere Biegung 22 auf, um sowohl eine einfache Klemmung am Außenring 3 als auch eine stabile Aufnahme des elektrisch leitenden Elements 7 zu ermöglichen. Dabei sind die Bleche 5, 6 an der Biegung 22 so gebogen, dass das elektrisch leitende Element 7 in einem von einem rechten Winkel abweichenden Winkel, insbesondere in einem Winkel zwischen 30° und 60°, zum Innenring 2 oder zur Welle 15 orientiert ist, wodurch die Reibung gegenüber einem rechtwinkligen Kontakt zwischen dem Innenring 2 oder der Welle 15 und dem elektrisch leitenden Element 7 reduziert werden kann. Zur Minimierung der Reibung oder zur Verbesserung der Stromableitfunktion kann auf die Welle 15 oder den Innenring 2 eine vorzugsweise beschichtete Hülse 12 aufgepresst werden. Die Hülse 12 weist einen Winkel 27 auf, um das Austreten von Schmiermittel aus dem Bereich der Wälzkörper 4 zu minimieren. Dazu bildet die Hülse 12 mit einem Dichtelement 29 eine Labyrinthdichtung 28 aus. Das Wälzlager 1 weist ferner ein zweites Dichtelement 30 auf, um den Austritt von Schmiermittel zu minimieren und das Eindringen von Schmutz in den Bereich der Wälzkörper 4 zu verhindern.

In Fig. 2 ist ein weiteres Ausführungsbeispiel eines erfindungsgemäßen Wälzlagers 1 dargestellt. Bei im Wesentlichen gleichem Aufbau wie zu Fig. 1 ausgeführt, sind die Bleche 5, 6 bei diesem Ausführungsbeispiel im Vergleich zu der in Fig. 1 gezeigten Ausführungsform um 180° gedreht eingebaut. Dadurch kann der gebogene Winkel 21 der Bleche 5, 6 als Einführfase dienen, wodurch die Montage vereinfacht wird. Ferner wird durch diese Einbaulage die Labyrinth-Wirkung der Labyrinthdichtung 28 verbessert, sodass der Bereich der Wälzkörper 4 besser gegen Schmutz geschützt ist und das Austreten von Schmiermittel aus diesem Bereich minimiert wird. Das elektrisch leitende Element 7 liegt dabei wieder unter einem Winkel von etwa 45° an der Hülse 12 an.

In Fig. 3 ist eine Lageranordnung mit einem dritten Ausführungsbeispiel eines erfindungsgemäßen Wälzlagers 1 mit einer Stromableitfunktion dargestellt. Bei im Wesentlichen gleichem Aufbau wie zu Fig. 1 und Fig. 2 ausgeführt, sind in diesem Ausführungsbeispiel drei Bleche 5, 6, 23 vorgesehen, zwischen denen zwei elektrisch leitende Elemente 7 angeordnet sind, welche durch das mittlere Blech 6 voneinander getrennt sind. Die elektrisch leitenden Elemente 7 sind vorzugsweise als Stoffronden 8, 17, 24 ausgeführt, wobei in den Stoff der Stoffronden 8, 17, 24 elektrisch leitende Fäden eingewebt sind, um die elektrische Leitfähigkeit des Stoffes zu erhöhen. Die elektrisch leitenden Elemente 7 liegen an der Hülse 12 an, welcher auf einer Welle 15 angeordnet ist. Alternativ kann die Hülse 12 auch auf den Innenring 2 des Wälzlagers 1 aufgepresst sein.

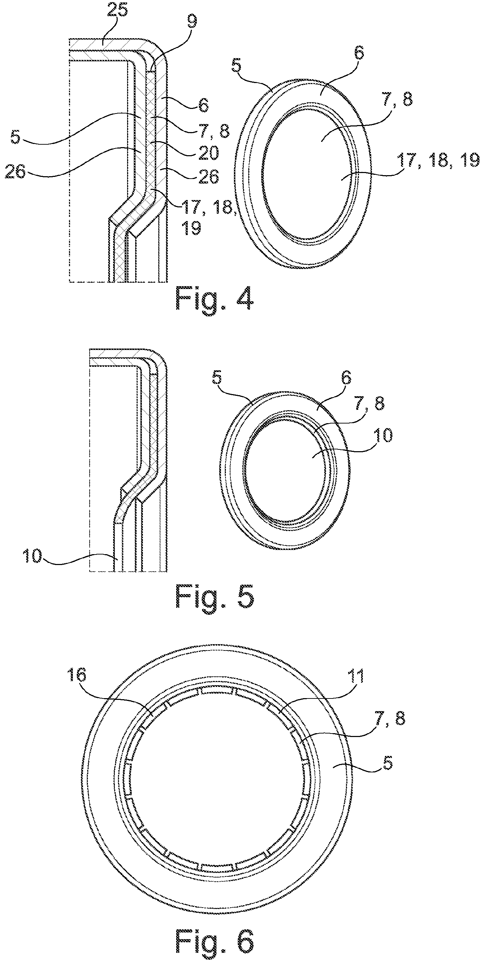

In Fig. 4 ist eine Baugruppe, welche ein erstes Blech 5 und ein zweites Blech 6 sowie ein zwischen den beiden Blechen 5 und 6 eingespanntes elektrisch leitendes Element 7 umfasst, dargestellt. Die Bleche 5, 6 weisen einen Einpressabschnitt 25 auf, mit welchem die Bleche 5, 6 am Außenring 3 des Wälzlagers 1 eingepresst werden und einen Klemmabschnitt 26, in welchem das elektrisch leitende Element 7 mit einer Presspassung 9 zwischen den beiden Blechen 5, 6 gespannt ist. Das elektrisch leitende Element 7 ist in Form einer flexiblen Ronde 8, insbesondere einer Stoffronde 17, einer Vliesscheibe 18 oder einer Scheibe 19 oder Folie aus einem Polymermaterial, ausgebildet. Die Ronde 8 ist mit leitenden Elementen 20, beispielsweise elektrisch leitenden Fäden oder elektrisch leitenden Zusätzen wie Ruß, Graphit, Kohlenstoff, Nanoröhren oder ähnlichem versehen, um die elektrisch Leitfähigkeit der Ronde zu erhöhen.

In das elektrisch leitende Element 7 wird eine zentrische Öffnung 10 eingebracht, wobei das Ausschneiden oder Stanzen der Öffnung 10 durch das Einspannen des elektrisch leitenden Elements 7 zwischen den beiden Blechen 5, 6 vereinfacht wird. Eine Baugruppe mit zwei Blechen 5, 6 und einem elektrisch leitenden Element 7, in welches eine zentrische Öffnung 10 eingebracht wurde, ist in Fig. 5 dargestellt.

In Fig. 6 ist eine weitere Darstellung einer solchen Baugruppe dargestellt, wobei in dieser Ausführungsvariante das elektrisch leitende Element 7 zusätzlich zur Öffnung 10 in mehrere, vorzugsweise gleichmäßig über den Umfang verteilte Kontaktsegmente 11 unterteilt ist. Durch die Unterteilung in mehrere Kontaktsegmente 11 kann die Reibung zwischen dem elektrisch leitenden Element 7 und dem Innenring 2 oder der Welle 15 weiter reduziert werden. Die Kontaktsegmente 11 liegen als Schleifelemente 16 an der Welle 15 oder dem Innenring 2 an, wobei ein Strompfad zwischen dem Innenring 2 und dem Außenring 3 durch den schleifenden Kontakt an den Schleifelementen 16 geschlossen ist, sodass ein elektrischer Potenzialunterschied zwischen dem Innenring 2 und dem Außenring 3 möglich ist.

### Bezugszeichenliste

- 1: Wälzlager
- 2: Innenring
- 3: Außenring
- 4: Wälzkörper
- 5: Erstes Blech
- 6: Zweites Blech
- 7: Elektrisch leitendes Element
- 8: Ronde
- 9: Presspassung
- 10: Öffnung
- 11: Kontaktsegment
- 12: Hülse
- 13: Laufbahn
- 14: Laufbahn
- 15: Welle
- 16: Schleifelement
- 17: Stoffronde
- 18: Vliesscheibe
- 19: Scheibe
- 20: Leitende Elemente
- 21: Winkel
- 22: Biegung
- 23: Drittes Blech
- 24: Zweite Ronde
- 25: Einpressabschnitt (des Blechs)
- 26: Klemmabschnitt (des Blechs)
- 27: Winkel (der Hülse)
- 28: Labyrinth
- 29: Erstes Dichtelement
- 30: Zweites Dichtelement

## Patentansprüche

1. Lageranordnung mit einer Welle (15) und mit einem Wälzlager (1) zur drehbaren Lagerung der Welle (15), das Wälzlager (1) umfassend:
- einen Innenring (2) mit einer ersten Laufbahn (13) für einen Wälzkörper (4),
- einen Außenring (3) mit einer zweiten Laufbahn (14) für einen Wälzkörper (4), sowie
- zwischen den Laufbahnen (13, 14) der Lagerringe (2, 3) angeordnete Wälzkörper (4),
- an einem ersten der Lagerringe (2, 3) mindestens zwei Bleche (5, 6) befestigt sind, wobei
- zwischen den beiden Blechen (5, 6) ein elektrisch leitendes Element (7) angeordnet ist, welches an dem jeweils anderen Lagerring (2, 3) oder einem mit dem jeweils anderen Lagerring (2, 3) verbundenen Bauteil (12, 15) anliegt,
**dadurch gekennzeichnet, dass**
- das elektrisch leitende Element (7) als eine Stoffronde (17) oder eine Vliesscheibe (18) ausgeführt ist, wobei
- in den Stoff der Stoffronde (17) oder in die Vliesscheibe (18) elektrisch leitende Fäden und/oder elektrisch leitende Zusätze (20) eingearbeitet sind,der Stoff der Stoffronde (17) oder die Vliesscheibe (18) eine Öffnung (10) aufweist, durch welche die Welle (15) durchgeführt **ist**

2. Lageranordnung nach Anspruch 1, **dadurch gekennzeichnet, dass**
- die Bleche (5, 6) ringförmig ausgebildet sind.

3. Lageranordnung (1) nach einem der Ansprüche 1 bis 3, **dadurch gekennzeichnet, dass**
- auf dem Innenring (2) oder auf der Welle (15) eine Hülse (12) angeordnet ist.

4. Lageranordnung nach Anspruch 3,
**dadurch gekennzeichnet, dass**
- die Hülse (12) einen ersten Bereich aufweist, welcher parallel zur Oberfläche der Welle (15) oder des Innenrings (2) verläuft und einen zweiten Bereich, welcher in einem Winkel (27) zum ersten Bereich verläuft, derart, dass der zweite Bereich einen Austritt von Schmiermittel aus dem Bereich der Wälzkörper (4) verhindert oder mindert, derart dass
- eine Kontaktstelle zwischen dem elektrisch leitenden Element (7) und dem Innenring (2) oder der Welle (15) im Wesentlichen frei von Schmiermittel gehalten wird.

5. Lageranordnung nach einem der Ansprüche 1 bis 4 **dadurch gekennzeichnet, dass**
- die Bleche (5, 6) eine Biegung (22) aufweisen, wodurch das elektrisch leitende Element (7) derart geführt ist, dass es unter einem von einem rechten Winkel abweichenden Winkel an dem Innenring (2), der Welle (15) oder der Hülse (12) anliegt.

6. Verfahren zur Herstellung eines Wälzlagers (1) einer Lageranordnung nach Anspruch 5, mit
- einem Innenring (2) mit einer ersten Laufbahn (13) für Wälzkörper (4),
- einem Außenring (3) mit einer zweiten Laufbahn (14) für die Wälzkörper (4), sowie
- zwischen den Laufbahnen (13, 14) der Lagerringe (2, 3) angeordnete Wälzkörpern (4),
**dadurch gekennzeichnet, dass**
- zwischen zwei Blechen (5, 6) ein elektrisch leitendes Element (7) eingespannt wird, wobei
- in das zwischen den Blechen (5, 6) eingespannte elektrisch leitende Element (7) eine Öffnung (10) eingebracht wird, und wobei
- die beiden Bleche (5, 6) an einem der Lagerringe (2, 3) des Wälzlagers (1) befestigt werden.

## Claims

1. A bearing arrangement having a shaft (15) and an anti-friction bearing (1) for rotatably bearing the shaft (15), the anti-friction bearing (1) comprising:
- an inner ring (2) having a first raceway (13) for a rolling body (4),
- an outer ring (3) having a second raceway (14) for a rolling body (4), and
- rolling bodies (4) arranged between the raceways (13, 14) of the bearing rings (2, 3),
- at least two metal sheets (5, 6) are fastened to a first of the bearing rings (2, 3), wherein
- an electrically conductive element (7) is arranged between the two metal sheets (5, 6) and abuts the other bearing ring (2, 3) or a component (12, 15) connected to the respective other bearing ring (2, 3),
**characterised in that**
- the electrically conductive element (7) is designed as a fabric disc (17) or a fleece disc (18), wherein
- electrically conductive threads and/or electrically conductive additives (20) are incorporated into the fabric of the fabric disc (17) or into the fleece disc (18); the fabric of the fabric disc (17) or the fleece disc (18) has an opening (10), through which the shaft (15) is passed

2. The bearing arrangement according to claim 1, **characterised in that**
- the metal sheets (5, 6) are ring-shaped.

3. The bearing arrangement (1) according to any one of claims 1 to 3, **characterised in that**
- a sleeve (12) is arranged on the inner ring (2) or on the shaft (15).

4. The bearing arrangement according to claim 3, **characterised in that**
- the sleeve (12) has a first area that runs parallel to the surface of the shaft (15) or the inner ring (2), and a second area that runs at an angle (27) to the first area, such that the second area prevents or reduces the escape of lubricant from the area of the rolling bodies (4), such that
- a contact point between the electrically conductive element (7) and the inner ring (2) or the shaft (15) is kept essentially free of lubricant.

5. The bearing arrangement according to any one of claims 1 to 4 **characterised in that**
- the metal sheets (5, 6) have a bend (22), whereby the electrically conductive element (7) is guided in such a way that it is at an angle deviating from a right angle on the inner ring (2), the shaft (15) or the sleeve (12).

6. A method for producing an anti-friction bearing (1) of a bearing arrangement according to claim 5, having
- an inner ring (2) having a first raceway (13) for rolling bodies (4),
- an outer ring (3) having a second raceway (14) for the rolling body (4), and
- rolling bodies (4) arranged between the raceways (13, 14) of the bearing rings (2, 3), **characterised in that**
- an electrically conductive element (7) is clamped between two metal sheets (5, 6), wherein
- an opening (10) is made in the electrically conductive element (7) clamped between the metal sheets (5, 6), and wherein
- the two metal sheets (5, 6) are fastened to one of the bearing rings (2, 3) of the anti-friction bearing (1).

## Revendications

1. Ensemble palier comprenant un arbre (15) et comprenant un palier à roulement (1) pour supporter en rotation 1 arbre (15), le palier à roulement (1) comportant :
- une bague intérieure (2) dotée d un premier chemin de roulement (13) pour un corps roulant (4),
- une bague extérieure (3) dotée d un second chemin de roulement (14) pour un corps roulant (4) et
- des corps roulants (4) disposés entre les chemins de roulement (13, 14) des bagues de palier (2, 3),
- au moins deux tôles (5, 6) sont fixées à une première bague de palier parmi les bagues de palier (2, 3), dans lequel
- un élément électroconducteur (7) est disposé entre les deux tôles (5, 6) et repose contre 1 autre bague de palier (2, 3) respective ou contre un composant (12, 15) relié à 1 autre bague de palier (2, 3) respective,
**caractérisé en ce que**
- 1 élément électroconducteur (7) est réalisé sous la forme d un disque textile (17) ou d un disque non-tissé (18), dans lequel
- des fils électroconducteurs et/ou des accessoires électroconducteurs (20) sont incorporés dans le tissu du disque textile (17) ou dans le disque non-tissé (18), le tissu du disque textile (17) ou le disque non-tissé (18) présente une ouverture (10) à travers laquelle passe 1 arbre (15)

2. Ensemble palier selon la revendication 1, **caractérisé en ce que**
- les tôles (5, 6) sont conçues en forme d anneau.

3. Ensemble palier (1) selon 1 une quelconque des revendications 1 à 3, **caractérisé en ce que**
- un manchon (12) est disposé sur la bague intérieure (2) ou sur 1 arbre (15).

4. Ensemble palier selon la revendication 3, **caractérisé en ce que**
- le manchon (12) présente une première zone qui s étend parallèlement à la surface de 1 arbre (15) ou de la bague intérieure (2) et une seconde zone qui s étend à un angle (27) par rapport à la première zone, de sorte que la seconde zone empêche ou réduise une sortie de lubrifiant de la zone des corps roulants (4), de sorte
- à maintenir un point de contact entre 1 élément électroconducteur (7) et la bague intérieure (2) ou 1 arbre (15) sensiblement exempt de lubrifiant.

5. Ensemble palier selon 1 une quelconque des revendications 1 à 4, **caractérisé en ce que**
- les tôles (5, 6) présentent un coude (22), 1 élément électroconducteur (7) étant ainsi guidé de manière à reposer à un angle s écartant de 1 angle droit sur la bague intérieure (2), sur 1 arbre (15) ou sur le manchon (12).

6. Procédé de fabrication d un palier à roulement (1) d un ensemble palier selon la revendication 5, comprenant
- une bague intérieure (2) dotée d un premier chemin de roulement (13) pour le corps roulant (4),
- une bague extérieure (3) dotée d un second chemin de roulement (14) pour les corps roulants (4) et
- des corps roulants (4) disposés entre les chemins de roulement (13, 14) des bagues de palier (2, 3),
**caractérisé en ce que**
- un élément électroconducteur (7) est serré entre deux tôles (5, 6), dans lequel
- une ouverture (10) est ménagée dans 1 élément électroconducteur (7) serré entre les tôles (5, 6) et dans lequel
- les deux tôles (5, 6) sont fixées sur 1 une des bagues de palier (2, 3) du palier à roulement (1).
